# EUROPÄISCHE PATENTSCHRIFT

(11) **EP 3 093 567 B1**
(45) Veröffentlichungstag und Bekanntmachung des Hinweises auf die Patenterteilung: **16.08.2017**
(21) Anmeldenummer: 15167255.7
(22) Anmeldetag: 12.05.2015
(51) Int. Cl.: F24F 3/16, F24F 6/06, F24F 6/16

(54) **FILTERKARTUSCHE, WALZE UND LUFTBEFEUCHTER**
FILTER CARTRIDGE, ROLLER AND AIR HUMIDIFIER
CARTOUCHE FILTRANTE, CYLINDRE ET HUMIDIFICATEUR D'AIR

(43) Veröffentlichungstag der Anmeldung: 16.11.2016
(73) Patentinhaber: VENTA-Luftwäscher GmbH, 88250 Weingarten (DE)
(72) Erfinder: Hitzler, Alfred, 88284 Wolpertswende (DE); Wegner, Guido, 88339 Bad Waldsee (DE)
(74) Vertreter: Otten, Roth, Dobler & Partner mbB Patentanwälte

(56) Entgegenhaltungen:
- DE-A1-102010 010 394
- JP-A- 2011 237 050
- US-A1- 2006 011 062
- US-A1- 2013 334 113
- US-A1- 2014 145 355

## Beschreibung

Die Erfindung betrifft einen Luftbefeuchter nach dem Oberbegriffs des Anspruchs 1 sowie ein Verfahren zur Filterung von Wasser, insbesondere zur Wasserenthärtung bzw. Reinigung von Wasser in einem Behälter in einem Luftbefeuchter oder dergleichen nach dem Oberbegriff des Anspruchs 13.

Aus dem Stand der Technik sind Luftbefeuchter bekannt, die dazu verwendet werden, die Luftfeuchtigkeit in Räumen mit relativ trockener Luft zu erhöhen, um somit ein für die Gesundheit zuträglicheres Raumklima zu schaffen. Insbesondere kann dabei das Prinzip der Kaltverdunstung genutzt werden, indem Wasser im Behälter eines Luftbefeuchters bevorratet und das Wasser mittels rotierender Walzen mit der Luft in Kontakt gebracht wird. Die Raumluft wiederum wird dazu von außen angesaugt und über die rotierenden, befeuchteten Walzen mit Hilfe eines Gebläses geführt, sodass diese Luft Feuchtigkeit aufnehmen kann. Derartige Geräte können auch dazu eingesetzt werden, um Partikel aus der Luft zu filtern. Um Verkalkungen des verwendeten Wassers reduzieren zu können, wird das Wasser vor dem Einleiten in den Behälter bzw. in den Luftbefeuchter gereinigt, indem beispielsweise in der Zuführleitung ein entsprechender Filter eingebaut wird. Darüber hinaus kann das Wasser mit Zusatzstoffen versehen werden, die eine Verkeimung verhindern sollen. Auch die Zugabe von Duftstoffen ist bekannt, um diese an die Raumluft abzugeben.

Aus der US 2006/0011062 A1 ist z. B. ein Gerät zur Luftbefeuchtung bekannt, bei dem zusätzlich kleine Schmutzpartikel über eigens gebildete Wassermembranen aus der Luft gefiltert werden können.

Aufgabe der Erfindung ist es, die Handhabung eines Luftbefeuchters bzw. eines Filterungsverfahrens für Wasser dahingehend zu vereinfachen, dass insbesondere ein schnellerer Befüllvorgang ermöglicht wird.

Die Aufgabe wird, ausgehend von einem Luftbefeuchter sowie einem Filterungsverfahren der eingangs genannten Art, durch die kennzeichnenden Merkmale der Ansprüche 1 bzw. 13 gelöst.

Durch die in den Unteransprüchen genannten Maßnahmen sind vorteilhafte Ausführungen und Weiterbildungen der Erfindung möglich.

Die Filterkartusche des erfindungsgemäßen Luftbefeuchters dient grundsätzlich der Filterung von Wasser, insbesondere zur Wasserenthärtung bzw. Reinigung von Wasser und kann in einem Luftbefeuchter oder dergleichen eingesetzt werden. Sie besitzt ferner einen Bevorratungsraum zur Bevorratung von Filtermaterial, insbesondere von Ionentauscherharz, Aktivkohle oder dergleichen. Damit das zu filternde Wasser in den Bevorratungsraum gelangen und dort mit dem Filtermaterial in Kontakt bzw. in Wechselwirkung treten kann, ist wenigstens eine Öffnung vorgesehen.

Ferner ist diese Filterkartusche dazu ausgebildet, in einem Behälter mit zu filterndem Wasser angeordnet zu werden, sodass die Filterkartusche wenigstens teilweise in das im Behälter bevorratete Wasser hineinragen kann und dass darüber hinaus die wenigstens eine Öffnung sowohl als Wassereinlass zur Zuführung von Wasser aus dem Behälter in den Bevorratungsraum als auch als Wasserauslass zur Abführung von Wasser aus dem Bevorratungsraum in den Behälter ausgebildet ist. Auf diese Weise wird ermöglicht, dass das in dem Behälter bevorratete Wasser, welches zur Luftbefeuchtung verwendet werden soll, nicht mehr durch das Filtermaterial hindurchgepumpt werden muss. Die Filterung kann im Behälter bzw. im Bevorratungsraum selbst erfolgen, d.h. die Befüllung des Behälters kann ohne Verzögerung durchgeführt werden. Das Wasser kann grundsätzlich durch die gleiche Öffnung in den Bevorratungsraum zum Filtermaterial gelangen und auch wieder aus dieser Öffnung in den eigentlichen Behälter zurückfließen. Genauso ist es möglich, dass das Wasser durch eine Öffnung zum Filtermaterial gelangt und durch eine andere Öffnung, sofern vorhanden, wieder in den Behälter strömt. Ein Pumpvorgang des Wassers durch die Filterkartusche kann jedoch vermieden werden.

Weitere Vorteile der Erfindung bestehen in der Möglichkeit einer vereinfachten Wartung und eines besonders leichten Wechsels der Filterkartusche. Ist ein Filter nämlich beispielsweise in eine Zuführleitung zum Behälter eingebaut, so muss grundsätzlich eine aufwändigere Wartung vorgenommen werden, insbesondere muss dafür gesorgt werden, dass die Leitung trotz des eingebauten Filters weiterhin dicht verschlossen ist und keine Leckage aufweist. Bei einem solchen herkömmlichen Filter kann ein Zusetzen des Filters bereits dafür sorgen, dass die Zuführleitung platzt bzw. weitere Beschädigungen auftreten. Diese Nachteile können bei der erfindungsgemäßen Filterkartusche vermieden werden.

Darüber hinaus wird bei der erfindungsgemäßen Filterkartusche ebenfalls eine günstigere Herstellung ermöglicht.

Die Filterkartusche wird relativ zum Wasser bzw. zu dem im Behälter bevorrateten Wasser bewegt. Erfindungsgemäß wird die Filterkartusche durch das Wasser hindurchbewegt, und es kann insbesondere eine größere Wassermenge mit dem Filtermaterial in Kontakt treten.

Zusätzlich kann durch die Bewegung der Filterkartusche eine Durchmischung des Wassers erfolgen, sodass eine homogenere Verteilung des gefilterten Wassers vorliegen kann. Diese Maßnahme kann sich daher besonders vorteilhaft auswirken, wenn in dem Behälter gerade gefiltertes Wasser mit noch nicht oder noch nicht so stark gefiltertem Wasser vermischt wird.

Erfindungsgemäß ist eine Lagerungsvorrichtung zur Lagerung im Behälter vorgesehen, nämlich eine Nabe zur Befestigung an einer Welle bzw. Drehachse. Die Filterkartusche kann grundsätzlich über eine Befestigungsvorrichtung oder über ein bewegliches Lager in dem Behälter angeordnet sein. Die Filterkartusche kann, wenn sie beweglich gelagert ist, in vorteilhafter Weise eine Drehbewegung ausführen, sodass die Filterkartusche z.B. im Wasser rotiert oder bei der Rotation ins Wasser teilweise oder vollständig eintaucht und wieder aus dem Wasser austritt. Durch eine solche Bewegung des Filtermaterials relativ zum Wasser kann entsprechend die Filterwirkung erhöht werden und das Wasser besser durchmischt sein. Ist zur Ausführung der Drehbewegung eine Welle bzw. eine Drehachse vorhanden, so kann die Filterkartusche besonders einfach über eine Nabe an dieser Welle befestigt werden, sodass die Filterkartusche mit der Drehbewegung der Welle auch eine Drehbewegung ausführt.

Gerade dann, wenn die Filterkartusche eine Drehbewegung ausführt, kann sie in vorteilhafter Weise bei einem Ausführungsbeispiel der Erfindung als Scheibe ausgebildet sein, die vorzugsweise rotationssymmetrisch zur Drehachse ausgebildet ist. Durch die Ausbildung als Scheibe bzw. als Filterdisk kann eine besonders günstige Filtergeometrie zur Filterung bereitgestellt werden, weil die Scheibe im Vergleich zu ihrem Gesamtvolumen eine besonders große Oberfläche aufweist, d.h. es kann besonders viel Wasser mit Filtermaterial in Kontakt kommen. In Richtung der Erstreckung der Drehachse ist eine Scheibe relativ dünn ausgebildet, d.h. das Filtermaterial kann über eine große Fläche verteilt werden, sodass das zu filternde Wasser, auch ohne große Wege zurückzulegen, zum Filtermaterial gelangen kann. Durch eine rotationssymmetrische Ausbildung kann eine Drehbewegung mechanisch vereinfacht werden, weil keine Unwuchten entstehen, und es gibt zeitlich keine Änderung, wie weit die Filterkartusche gerade ins Wasser eintaucht.

Obgleich grundsätzlich das Wasser nicht aktiv durch das Filtermaterial hindurchgepumpt wird, kann dennoch wenigstens eine Transportstruktur zur Aufnahme und Abgabe von Wasser vorgesehen sein, sodass dann, wenn die Filterkartusche durch das Wasser bewegt wird (und mit ihr das Filtermaterial) mit Hilfe der Transportstruktur ein länger andauernder Kontakt des Wassers zum Filtermaterial ermöglicht wird. Durch diese Maßnahme kann also wiederum die Filterung, deren Effektivität und der Durchmischungsgrad des bevorrateten Wassers verbessert werden.

Bei einer vorteilhaften Ausführungsvariante der Erfindung können beispielsweise schaufelartige oder löffelartige Strukturen als Transportstrukturen eingesetzt werden, sodass bei der Drehbewegung der Filterkartusche das Wasser über die Löffel bzw. Schaufeln aufgenommen wird und über einen größeren Zeitraum ein Kontakt zum Filtermaterial aufnehmen kann. Die Transportstrukturen können beispielsweise in Bezug zur Drehachse radial nach außen, ähnlich wie Speichen an einem Rad, verlaufen. Zur Ausbildung einer schaufel- oder löffelartigen Struktur können die Transportstrukturen zudem nach außen hin gekrümmt ausgebildet sein. Die gekrümmte Struktur bildet somit eine Mulde, in der das Wasser, das dort hinein gelangt, noch eine Zeitlang gehalten werden kann.

Dementsprechend kann also die Transportstruktur vorzugsweise bei einer Scheibe zwischen der Nabe und dem Rand der Scheibe ähnlich einer Speiche verlaufen. In vorteilhafter Weise besitzt somit die Transportstruktur mehrfache Funktionen, sie dient nämlich nicht nur der Aufnahme von Wasser, sondern auch der Stabilisierung, weil sie eine tragende Struktur zwischen Nabe und Rand bildet. Zudem kann sie auch in vorteilhafter Weise dazu verwendet werden, eine Trennstruktur innerhalb der Filterkartusche zu bilden, beispielsweise einzelne Kompartimente auszubilden, was insbesondere dann vorteilhaft sein kann, wenn verschiedene Filtermaterialien oder auch andere Befüllungen (z.B. Hygienemittel oder Duftstoffe) in einzelnen Kompartimenten bevorratet werden sollen.

In einer besonders bevorzugten Weiterbildung der Erfindung wird eine Kombination aus zwei Relativbewegungen verwendet, es wird nämlich zum einen zunächst das Filtermaterial durch das zu filternde Wasser hindurchbewegt. Zum anderen wiederum kann zusätzlich das zu filternde Wasser sich relativ zum Filtermaterial bewegen, was besonders vorteilhaft dadurch erreicht wird, dass die wenigstens eine Transportstruktur dazu ausgebildet ist, bei einer Drehung um die Drehachse in wenigstens einer Drehrichtung aufgenommenes Wasser in ihrem in Schwerkraftrichtung oberen Bereich zu transportieren und das Wasser dort aus der Transportstruktur abzugeben, sodass das Wasser an der Filterkartusche entlang, insbesondere am Filtermaterial entlang in Schwerkraftrichtung nach unten fließen kann. Beispielsweise kann dazu die Filterkartusche als rotierende Scheibe ausgebildet sein, die im in Schwerkraftrichtung unteren Bereich in das Wasser eingetaucht ist, welches in dem Behälter bevorratet wird.

Durch die Öffnungen der Filterkartusche kann das Wasser in den Bevorratungsraum zum Filtermaterial gelangen. Dreht sich die Scheibe, wird also das Filtermaterial durch das Wasser hindurch bewegt, kann ein Teil des Wassers über die Transportstrukturen mitgenommen werden und wird bei der Drehung aus dem bevorrateten Wasser herausgehoben. Da die Transportstrukturen, insbesondere, wenn diese als Schaufel oder Löffel ausgebildet sind, an einer Stelle offen sind, kann das Wasser dann, wenn die Transportstruktur in das bevorratete Wasser eintaucht, einfach aufgenommen werden und ab einer gewissen Winkelstellung im Laufe der Drehung wieder hinausfließen. In der Regel wird dies bei einer Drehung einer Filterdisk dann geschehen, wenn die Schaufel entgegen der Schwerkraftrichtung schräg nach oben oder sogar senkrecht nach oben zeigt. In diesem Bereich wird also das Wasser aus der Transportstruktur herausfließen, und kann somit an weiterem Filtermaterial vorbeifließen und nach unten wieder in den Behälter zum sonstigen bevorrateten Wasser gelangen. In vorteilhafter Weise kann dadurch auch die Zeit der Filterung vergrößert werden, weil das Wasser nicht nur im unteren Bereich des Behälters gefiltert wird, wenn das Filtermaterial dort eintaucht und durch das Wasser geführt wird, sondern es kann auch mitgenommen werden und beim Herunterrinnen an der Filterkartusche bzw. Filterdisk zusätzlich gefiltert werden. Durch diese Ausführungsvariante kann also die Effektivität der Filterkartusche gesteigert werden.

Darüber hinaus bietet diese Anordnung noch den Vorteil, dass zum Beispiel bei einer Anwendung im Zusammenhang mit einem Luftbefeuchter die Filterkartusche selbst die Funktion einer Walze zur Durchführung der Kaltverdunstung bzw. zur Filterung der Luft ausführen kann. Das bedeutet, dass die Filterkartusche im Betrieb nicht nur zur Filterung des Wassers dient, sondern auch eine Befeuchtung der Luft und/oder eine Filterung der Luft vornehmen kann. Wird die Filterkartusche sodann beispielsweise auf der Walze eines Luftbefeuchters angeordnet, so kann in vorteilhafter Weise eine optimale Raumausnutzung erfolgen: Zwar wird ein Teil der Walze, der zur eigentlichen Luftbefeuchtung verwendet wird, durch die Filterkartusche "ersetzt"; die Filterkartusche kann jedoch wiederum die eigentliche Funktion des Plattenstapels der Walze, also die Luftbefeuchtung, übernehmen.

Wie bereits oben erwähnt, können einzelne Trennstrukturen auch als Trennwand zur Abtrennung einzelner Kompartimente innerhalb des Bevorratungsraums ausgebildet sein und verwendet werden, was sich als besonders nützlich erweisen kann, wenn verschiedene Inhaltsstoffe in einzelne Kompartimente eingefüllt werden sollen. Als Füllmaterialien der Kompartimente kommen beispielsweise ein Ionentauscherharz oder Aktivkohle in Betracht. Es ist aber auch denkbar, Duftstoffe oder zum Beispiel Hygienemittel, vorzugsweise zur Reinigung und Desinfektion des Wassers als Füllmaterialien zu verwenden. In Luftbefeuchtern werden ohnehin vielfach Duftstoffe verwendet. Diese können beispielsweise von außen in das bevorratete Wasser als Tropfen eingeträufelt werden. Durch die Möglichkeit, die Duftstoffe über die Filterkartusche zuzuführen, kann insbesondere eine gezieltere Dosierung erfolgen, und zwar über einen längeren Zeitraum. Die Duftstoffe müssen also nicht in derart kurzen Zeitabständen wieder in den Behältern nachgefüllt werden, sondern können während des Betriebs der Filterkartusche stetig in genau dosierter Weise abgegeben werden. Zudem ermöglichen Kompartimente ebenfalls, dass auch beim Nachfüllen nicht immer gesamte Filterkartusche ausgetauscht oder neu befüllt werden muss, sondern dieser Vorgang auch kompartimentweise erfolgen kann.

Beispielsweise kann es auch vorkommen, dass etwa das eigentliche Filtermaterial, z.B. die Aktivkohle oder das Ionentauscherharz, eine andere Lebensdauer besitzt als die bevorrateten Duftstoffe Hygienemittel. Damit nicht die gesamte Filterkartusche oder deren gesamter Inhalt ausgetauscht werden muss, kann der Austauch jeweils kompartimentweise erfolgen, sodass also auch nur die Stoffe ausgetauscht werden, die tatsächlich aufgebraucht sind bzw. deren Wirkungsweise erschöpft ist. Bei Hygienemitteln kann es sich insbesondere um solche Stoffe handeln, die eine Entkeimung ermöglichen bzw. zum Beispiel eine Verpilzung vermeiden. Eine Filterkartusche mit entsprechenden Kompartimenten ist also in vorteilhafter Weise vielseitig und flexibel einsetzbar.

Damit das Wasser sehr gut an das Filtermaterial gelangen kann, das Filtermaterial wiederum im Bevorratungsraum verbleibt und nicht austreten kann, können die Öffnungen in vorteilhafter Weise mit netzartigen, wasserdurchlässigen Strukturen begrenzt werden. In der Regel muss hier abgewogen werden, wie groß die Maschen einer derartigen Netzstruktur sein sollen, damit das Filtermaterial nicht hindurchtreten kann, wenn es sich dabei beispielsweise um ein Granulat handelt. Die Öffnungen können daher auch mit durchlässigen Membranen, mit Gewebe- oder Filzstrukturen begrenzt werden, solange eine Durchlässigkeit für Wasser in ausreichendem Maße gewahrt bleibt.

Grundsätzlich kann die Filterkartusche als Wegwerfartikel ausgebildet sein, sodass sie dann, wenn das Füllmaterial (Filtermaterial, Duftstoffe bzw. Hygienemittel) hinsichtlich seiner Wirkung erschöpft ist, einfach ausgetauscht wird. Denkbar ist aber auch, dass die Filterkartusche öffenbar und wiederverschließbar ausgebildet ist, um den Bevorratungsraum entleeren und wieder befüllen zu können. Durch diese Maßnahme kann somit Abfall vermieden werden. Denkbar ist auch, dass die Kartuschen an den Hersteller zurückgegeben werden können und werkseitig neu befüllt werden. Insbesondere ist in diesem Zusammenhang auch denkbar, dass die Filtermaterialien, die Duftstoffe oder die Hygienemittel jeweils als zusammenhängender Austauschartikel, beispielsweise als komprimierter Block bzw. als Tablette (sogenannter "Tab") ausgebildet sind und einfach in das entsprechende Kompartiment eingesetzt werden können, um den Nachfüll- bzw. Austauschprozess vereinfachen zu können.

Gerade Duftstoffe oder Hygienemittel können auch als wasserlösliche Feststoffe ausgebildet sein, die sich mit der Zeit im Wasser auflösen und sodann vollständig verschwinden, sodass das Kompartiment in diesem Fall leer ist und wieder befüllt werden muss.

Ein Luftbefeuchter zur Befeuchtung von Luft durch Kaltverdunstung umfasst eine Walze, um das Wasser und zu befeuchtende Luft miteinander in Kontakt zu bringen. Regelmäßig wird bei Anwendung im Zusammenhang mit Raumluft Wasser als Flüssigkeit verwendet, weil der Wassergehalt in der Raumluft hierfür entscheidend ist. Es ist grundsätzlich aber denkbar, das Kaltverdunstungsprinzip auch mit anderen Flüssigkeiten durchzuführen. Die erfindungsgemäße Walze weist eine Welle und wenigstens eine Platte auf, wobei die wenigstens eine Platte koaxial in Bezug auf die Welle angeordnet ist, sodass eine Drehung um die Welle bewerkstelligt werden kann. Die Walze umfasst entsprechende Platten, welche ins Wasser eintauchen können, um insbesondere durch diese Maßnahme die Oberfläche gegenüber einer zum Beispiel zylinderförmigen Walze vergrößern zu können. Die benetzten Platten können somit viel wirkungsvoller und auf einer wesentlich größeren Fläche mit der Luft in Kontakt treten, um sodann die Feuchtigkeit abzugeben.

Bei einem erfindungsgemäßen Luftbefeuchter taucht die Walze im Betriebszustand wenigstens teilweise in die Flüssigkeit bzw. in das Wasser ein. Der in das Wasser eintauchende Teil der Walze besteht in der Regel aus den Platten der Walze, wobei die entsprechenden Plattenabschnitte benetzt werden und dann, wenn der zuvor eingetauchte und somit benetzte Teil der Platte sich im weiteren Verlauf der Drehung außerhalb der Flüssigkeit befindet, durch Kaltverdunstung Wasser an die Raumluft abgibt. Dementsprechend zeichnet sich die erfindungsgemäße Walze dadurch aus, dass eine erfindungsgemäße Filterkartusche bzw. eine Filterkartusche gemäß einem Ausführungsbeispiels der Erfindung als Teil der Walze verwendet wird. Hierdurch können die bereits zuvor genannten Vorteile entsprechend benutzt werden.

Eine baulich besonders einfache und zweckmäßige Anordnung erfolgt dadurch, dass erfindungsgemäß die Filterkartusche auf der Welle angebracht ist.

Hierdurch wird ermöglicht, dass die Filterkartusche simultan mit den Platten der Walze mitbewegt wird und keine weitere Mechanik grundsätzlich notwendig ist, um das Filtermaterial durch das Wasser hindurchzubewegen.

Weist die Filterkartusche zusätzliche Transportstrukturen, insbesondere gekrümmte Transportstrukturen (in Form einer schaufel- oder löffelartigen Struktur) auf, so können die Transportstrukturen in Bezug zur Walze so angeordnet sein, dass die Bauchseite der Krümmung der Transportstruktur auf der in Drehrichtung abgewandten Seite liegt. Die schaufel- oder löffelartigen Strukturen greifen somit bei der Drehbewegung in das Wasser und können dieses somit aufnehmen. Durch diese Maßnahme kann insbesondere die Effektivität der Filterkartusche gesteigert werden.

Bei einer Ausführungsform der Erfindung kann die Filterkartusche parallel zu wenigstens einer der wenigstens einen Platte angeordnet sein. Aus mechanischen Gründen ist dies regelmäßig eine besonders bevorzugte Anordnung, weil eine Platte und insbesondere eine Filterdisk grundsätzlich eine ähnliche Form haben, und somit auch der Widerstand bei der Bewegung durch das Wasser nicht wesentlich größer sein muss. Außerdem profitieren beide, Platten und Filterkartuschen davon, dass sie bereits bei dieser Anordnung teilweise ins Wasser eintauchen können, Wasser aufnehmen können bzw. von der Oberfläche mit Wasser befeuchtet werden und dies aus dem eigentlichen Becken herausheben können. Durch die Kopplung der Filterkartusche an die Platten werden diese synchron in gleicher Weise bewegt. Zwischen den Platten bzw. der Filterkartusche kann dabei jeweils ein Luftspalt angeordnet sein, sodass auch hier ein Kontakt zwischen Luft und dem Wasser möglich ist bzw. bei der Filterkartusche das Wasser dort einfach wieder herunterrinnen kann.

Bei einem Luftbefeuchter gemäß der Erfindung ist die wenigstens eine Öffnung der Filterkartusche so im bzw. am Behälter angeordnet, dass das von der Filterkartusche aus dem Behälter zur Filterung aufgenommene Wasser wieder in den Behälter zu dem gerade nicht aufgenommenen Wasser abgegeben wird. Eine Öffnung in der Filterkartusche kann also zum Einfließen oder Ausströmen des Wassers verwendet werden. In den Behälter mischt sich wiederum bei jedem einzelnen Filtervorgang gerade gefiltertes und noch nicht gefiltertes Wasser. Im Zusammenhang mit einer Walze umfasst ein Ausführungsbeispiel eines Luftbefeuchters einen motorischen Antrieb zur Rotation der Walze um die Drehachse. In vorteilhafter Weise können Walze bzw. die Platten der Walze und die Filterkartusche gleichzeitig bewegt werden. Im Übrigen kann auch die Dimensionierung der Filterkartusche ähnlich gewählt werden wie die Größe der Platten, wobei regelmäßig zu erwarten ist, dass die Filterkartusche aufgrund des Filtermaterials, mit dem sie befüllt werden muss, dicker ausgebildet ist. Der Durchmesser der Filterdisk kann aber dem der Platten entsprechen bzw. gleich sein. In vorteilhafter Weise wird dadurch auch ermöglicht, dass bestehende Luftbefeuchter in einfacher Weise nachgerüstet werden können, indem nämlich die Filterkartusche auf die Welle einer Walze aufgeschoben wird. Je nach Platzverhältnissen können gegebenenfalls Platten entfernt werden, oder aber die Filterkartusche wird lediglich zusätzlich angebracht.

Bei einem erfindungsgemäßen Verfahren zur Filterung von Wasser gemäß Anspruch 13. Ein derartiges Verfahren zeichnet sich also dadurch aus, dass das Filtermaterial zunächst im Wesentlichen relativ zum Wasser bewegt wird. In vorteilhafter Weise wird dadurch ermöglicht, dass die Befüllung ohne Verzögerung erfolgen kann.

Insbesondere kann bei einem Ausführungsbeispiel des erfindungsgemäßen Verfahrens eine Filterkartusche, eine Walze bzw. ein Luftbefeuchter gemäß der Erfindung verwendet werden. Durch diese Maßnahme können die zuvor genannten Vorteile für das Verfahren genutzt werden.

### Ausführungsbeispiel

Ein Ausführungsbeispiel der Erfindung ist in den Zeichnungen dargestellt und wird nachstehend unter Angabe weiterer Einzelheiten und Vorteile näher erläutert.

Im Einzelnen zeigen:
- Figuren 1 bis 5: schematische Darstellungen eines Teils eines Luftbefeuchters mit Walze und Behälter gemäß der Erfindung in verschiedenen Ansichten,
- Figur 6: eine schematische Darstellung Filterkartusche gemäß der Erfindung auf einer Welle, sowie
- Figur 7: eine schematische Explosionsdarstellung zum Aufbau einer Filterkartusche gemäß der Erfindung.

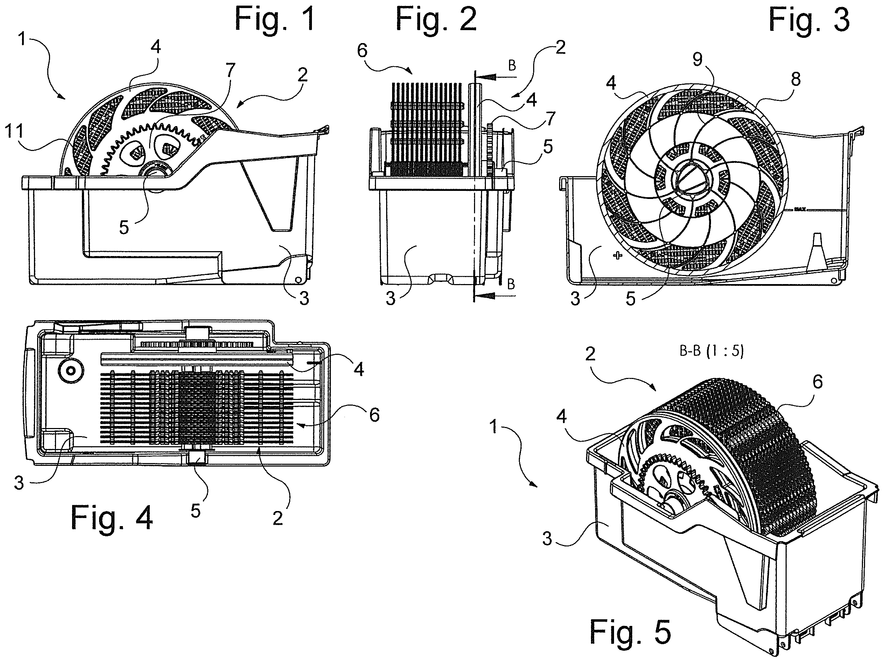

Die Figuren 1 bis 5 zeigen schematisch einen Teil eines Luftbefeuchters 1 mit einer Walze 2 und einem Behälter 3; der Deckel mit Gebläse ist zur Vereinfachung nicht dargestellt. In Figur 1 blickt man bei der Walze 2 direkt auf die Filterkartusche 4, also in Richtung der Drehachse bzw. Welle 5. In Figur 2 ist dieser Teil des Luftbefeuchters 1 dargestellt, wobei der Betrachter senkrecht auf die Welle 5 blickt. Auf der Welle 5 ist die Walze 2 gelagert, welche die Filterkartusche 4 und einen Plattenstapel 6 umfasst. Die einzelnen Platten im Plattenstapel 6 sind miteinander verbunden. Sie sind parallel angeordnet, sodass zwischen ihnen einzelne Zwischenräume bestehen. Der Plattenstapel 6 und die Filterkartusche 4 sind, wie bereits beschrieben, auf der gleichen Welle 5 angeordnet, wobei zwischen ihnen ebenfalls ein Abstand vorgesehen ist.

In dem Behälter 3 wird das Wasser, das zur Luftbefeuchtung verwendet wird, eingefüllt. Es ist ferner ersichtlich, dass die Achse 5 hinsichtlich ihrer Höhe so hoch angeordnet ist, dass der Plattenstapel 6 und die Filterkartusche 4 im Wasser, das in den Behälter eingefüllt wird, eintauchen können. Ebenfalls zu sehen ist in den Figuren 1 und 2 eine Art Zahnrad 7, das einen Teil der Mechanik bildet, die zum Antrieb der Welle 5 gehört.

Die Platten des Plattenstapels 6 dienen dazu, die Luft über Kaltverdunstung zu befeuchten. Das heißt, dass sich die Platten drehen, bei der Drehung in das Wasser eintauchen, sodass die Oberflächen der einzelnen Platten des Plattenstapels 6 befeuchtet werden. Der Luftbefeuchter 1 weist grundsätzlich noch einen Deckel auf, der sich oberhalb des Behälters 3 bzw. des Plattenstapels 6 befindet, und durch den Luft beispielsweise senkrecht zur Welle von oben nach unten über einen nicht dargestellten Ventilator eingeblasen wird. Die Luft gelangt somit mit den Platten des Plattenstapels 6 und im vorliegenden Ausführungsbeispiel auch mit der Filterkartusche 4 in Berührung. Insbesondere über die Platten 6, gegebenenfalls auch über die Filterkartusche 4 kann die Luft Feuchtigkeit aufnehmen und gelangt anschließend wieder nach außen. Der Plattenstapel 6 besitzt darüber hinaus den Vorteil, dass durch ihn auch ein Filterungseffekt zustande kommen kann, das heißt Partikel werden über den Kontakt mit dem Wasser abgeschieden, sodass ein Reinigungseffekt der Luft zustande kommt.

Eine Draufsicht von oben in den Behälter 3 ist in Figur 4 dargestellt. Die Luft wird in der Regel so eingeblasen, dass sie, hier gemäß der Darstellung in Figur 4, in die Zeichenebene einströmt. Eine Schrägansicht des Luftbefeuchters 1 ist in Figur 5 dargestellt.

Ein schematischer Schnitt B-B, der senkrecht durch die Welle 5 verläuft, ist in Figur 3 dargestellt. Der Schnitt B-B verläuft genau durch die Filterkartusche 4. Der Schnitt durch die Welle 5 zeigt, dass diese in ihrem inneren Querschnitt nicht rund ausgebildet ist, sondern an drei Seiten gegenüber einem Kreis abgeflacht ist, ähnlich einem Reuleaux-Dreieck. Bei einem Reuleaux-Dreieck handelt es sich um ein geometrisches Gebilde, das ausgehend von einem gleichseitigen Dreieck konstruiert wird, wobei um jede Ecke ein Kreisbogen mit der Kantenlänge des ursprünglichen Dreiecks geschlagen wird. Zwei benachbarte Ecken werden dadurch über einen Kreisbogen miteinander verbunden. Denkbar ist auch, dass andere Passformen hier verwendet werden. In Betracht kommt hier eine zweifache Funktion. Zum einen erleichtert dieser, von der Kreisform abweichende Querschnitt der Welle, dass der Plattenstapel bzw. die Filterkartusche drehfest auf der Welle gelagert ist. Zum anderen kann durch diese Passform eine Codierung vorgenommen werden, das heißt es können nur Platten- oder Filterkartuschen auf der Welle angeordnet werden, deren Nabe eine entsprechende Passform aufweist. Auf diese Weise kann verhindert werden, dass ungeeignete Bauteile auf der Welle installiert werden, die möglicherweise zu Fehlfunktionen oder zu einer Schädigung des Luftbefeuchters führen könnten. Es genügt in der Regel auch, nur den Teil der Welle mit einer abweichenden Passform im Querschnitt auszustatten, in dem die Platten bzw. die Filterdisk angebracht werden.

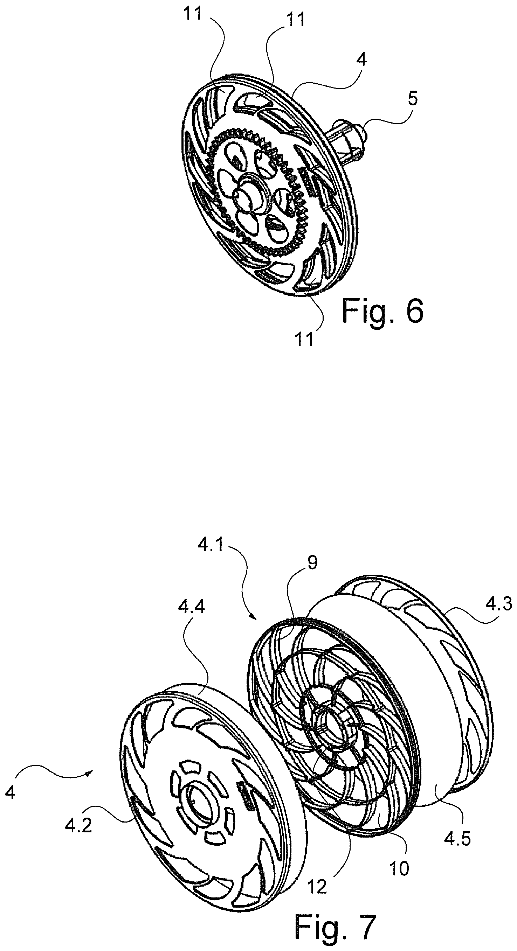

Figur 3 zeigt ebenfalls, dass zwischen der Welle 5 bzw. der Nabe der Filterkartusche 4 und dem Außenrand 8 der Filterkartusche 4 Trennstrukturen 9, die wie einzelne Speichen angeordnet sind, verlaufen. Diese Speichen 9 verlaufen gekrümmt, wobei die Drehrichtung in Figur 3 im Uhrzeigersinn verläuft. Die schaufelartigen Trennstrukturen 9 können also Wasser am Boden des Behälters aufnehmen und mitnehmen, bis das Wasser schließlich bei weiterer Drehung "ausgekippt" wird und an der Filterkartusche 4 herunterlaufen kann. Die einzelnen Kompartimente 10 zwischen den Trennstrukturen 9 können Filtermaterial aufnehmen. Das Wasser gelangt grundsätzlich, sowohl im statischen Fall als auch bei rotierender Filterkartusche 4 durch die Öffnungen 11 ins Innere der Filterkartusche 4 (vgl. auch Figur 6). Dadurch, dass die Trennstreifen 9 jeweils einzelne Kompartimente 10 voneinander abtrennen, können die Kompartimente 10 jeweils auch mit unterschiedlichem Filtermaterial, mit Duftstoffen oder Hygienemitteln befüllt werden.

Gleichzeitig ist die Filterkartusche 4 über die Öffnungen 11 offen ausgebildet, sodass das Wasser grundsätzlich an jeder Stelle herausrinnen kann. Besonders vorteilhaft erweist sich an dieser Vorrichtung, dass sie nicht nur einfach ausgetauscht und gegebenenfalls wieder befüllt werden kann, sondern dass der Behälter 3 sofort befüllt werden kann und beim Betrieb gleichzeitig eine Entkalkung vorgenommen wird. Diese Maßnahme ist in der Regel völlig ausreichend, um eine Verkalkung des Luftbefeuchters 1 verhindern bzw. deutlich verringern zu können.

Wie in Figur 3 zu sehen ist, gelangen der Plattenstapel 6 bzw. die Filterkartusche 4 bis fast auf den Boden des Behälters 3, sodass eine optimale Ausnutzung des Wassers auch bei niedrigem Wasserstand erfolgen kann. Die Filterkartusche 4 ist als Filterdisk (scheibenförmig) ausgebildet.

In vorteilhafter Weise kann die Filterkartusche 4 besonders gut zur Nachrüstung eines Luftbefeuchters verwendet werden, weil bei einem derartigen Luftbefeuchter der Walzenantrieb schon im Gerät integriert ist. Ein zusätzlicher Antriebsmotor kann somit entfallen. Die Filterdisk 4 wird lediglich auf die Achse 5 der Verdunsterwalze 2 gesetzt (vgl. auch Figur 6). Der Befüllvorgang kann daher ohne Verzögerung erfolgen, da das Wasser nicht erst durch einen Filter in der Zuflussleitung hindurchgedrückt werden muss. Neben einer vereinfachten Wartung und einem leichten Wechsel der Filter kann die Filterdisk 4 zusätzlich über die große Oberfläche den Befeuchtungsvorgang unterstützen. Die Herstellung kann sehr kostengünstig erfolgen. Die Filterdisk verfügt über ein großes Füllvolumen bei einem relativ geringen Bauraum. Sie ist darüber hinaus stapelbar und kann platzsparend verpackt werden. Durch die große Bevorratungsmöglichkeit an Filtermaterial kann die Kapazität der Filterkartusche bzw. deren Lebensdauer sehr lange anhalten. Auch in Bezug auf einen reibungslosen Betrieb ermöglicht die Filterkartusche, dass selbst bei Verstopfen des Filtermaterials, beispielsweise eines Ionentauscherharzes, keine Funktionseinschränkung grundsätzlich zu befürchten sind. Auch können selbst bei Verstopfen des Filtermaterials keine Leitungen platzen, sodass die Apparatur beschädigt würde oder auch sicherheitsrelevante Bedenken bestehen könnten.

In vorteilhafter Weise kann als Ionentauscherharz zum Beispiel ein mit Silberionen dotiertes Ionentauscherharz für einen besonders hygienischen Betrieb eingesetzt werden. Denkbar sind auch silberimprägnierte Aktivkohle. Auch antibakterielle Granulate oder Silbergewebe können integriert sein. Soll auch ein Duft- oder Parfümstoff an die Umgebung abgegeben werden, kann in einzelnen Kompartimenten ein Duftöl zur Raumbeduftung bevorratet sein. Dieses kann mit dem Wasser auch in Wechselwirkung treten und an dieses abgegeben werden. Die Öffnungen 11 können mit einem PP/PA-Gewebe versehen sein, während der Gehäuserahmen beispielsweise aus PP/PE besteht (Abkürzungen: PP: Polypropylen, PE: Polyethylen, PA: Polyamid).

Wie in Figur 7 dargestellt ist, kann die Filterkartusche 4 (hier ohne Befüllung der Kompartimente 10) beispielsweise fünfteilig ausgebildet sein, nämlich aus einem Rahmengestell 4.1, in dem ebenfalls die Trennstrukturen 9 integriert sind, um die Kompartimente 10 voneinander abzutrennen. Ebenfalls ist eine Nabe 12 zum Aufstecken auf der Welle 5 auf. Darüber hinaus sind zwei Deckelbereiche 4.2 und 4.3 vorgesehen, durch welche die Filterkartusche 4 seitlich begrenzt wird. Zwischen der Mittenstruktur 4.1 und den Randstrukturen 4.3 ist jeweils eine Gewebematte 4.4 bzw. 4.5 eingelegt, die die Kompartimente 10 nach außen hin abtrennt. Ist diese Filterdisk 4 öffenbar ausgebildet, können aus Hygienegründen zum Beispiel die Strukturen 4.1, 4.2 und 4.3 gereinigt werden (zum Beispiel in der Spülmaschine), während die Gewebe zum Beispiel ausgetauscht werden und des Weiteren die Kompartimente 10 neu befüllt werden.

### Bezugszeichenliste:

- 1: Luftbefeuchter
- 2: Walze
- 3: Behälter
- 4: Filterdisk
- 5: Welle
- 6: Plattenstapel
- 7: Zahnrad
- 8: Außenrand
- 9: Trennstrukturen
- 10: Kompartimente
- 11: Öffnung
- 12: Nabe
- 4.1: Rahmengestell
- 4.2: Deckelbereich
- 4.3: Deckelbereich
- 4.4: Gewebematte
- B-B: Schnitt durch Filterdisk

## Patentansprüche

1. Luftbefeuchter (1) zum Befeuchten von Luft durch Kaltverdunstung einer Flüssigkeit, insbesondere von Wasser, mit einem Behälter (3) zur Bevorratung der Flüssigkeit,
wobei eine Walze (2) zur Luftbefeuchtung durch Kaltverdunstung der Flüssigkeit sowie ein motorischer Antrieb zur Rotation der Walze (2) um die Drehachse vorgesehen sind,
wobei die Walze (2) eine Welle (5) und wenigstens eine Platte (6) aufweist, wobei die wenigstens eine Platte (6) koaxial in Bezug auf eine Welle (5) angeordnet ist, und wobei die Walze (2) dazu ausgebildet ist, dass die wenigstens eine Platte (6) wenigstens teilweise in die Flüssigkeit eintaucht, um mit dem bei weiterer Drehung aus der Flüssigkeit austretenden, benetzten Teil die Flüssigkeit durch Kaltverdunstung an die zu befeuchtende Luft abzugeben, **dadurch gekennzeichnet, dass** die Walze (2) eine Filterkartusche (4) umfasst, welche zur Filterung von Wasser, insbesondere zur Wasserenthärtung und/oder Reinigung von Wasser, zur Verwendung in einem Luftbefeuchter (1) oder dergleichen ausgebildet ist, mit einem Bevorratungsraum zur Bevorratung von Filtermaterial, insbesondere von Ionentauscherharz, Aktivkohle oder dergleichen, und mit wenigstens einer Öffnung (11), um das zu filternde Wasser dem Bevorratungsraum zuzuführen und/oder aus dem Bevorratungsraum zu entlassen, wobei die Filterkartusche (4) dazu ausgebildet ist, in dem Behälter (3) mit zu filterndem Wasser angeordnet zu werden, sodass die Filterkartusche (4) wenigstens teilweise in das im Behälter (3) bevorratete Wasser hineinragen kann, wobei die wenigstens eine Öffnung (11) sowohl als Wassereinlass zur Zuführung von Wasser aus dem Behälter in den Bevorratungsraum als auch als Wasserauslass zur Abführung von Wasser aus dem Bevorratungsraum in den Behälter (3) ausgebildet ist, wobei eine Lagerungsvorrichtung zur Lagerung im Behälter vorgesehen ist, nämlich eine Nabe (12) zur Befestigung an der Welle (5) und/oder Drehachse,
*wobei **die Filterkartusche (4) auf der Welle (5) angebracht ist,***
wobei die Filterkartusche (4), insbesondere die wenigstens eine Öffnung (11) so im und/oder am Behälter (3) angeordnet ist, dass das von der Filterkartusche (4) aus dem Behälter (3) zur Filterung aufgenommene Wasser wieder in den Behälter (3) zu dem gerade nicht aufgenommenen Wasser abgegeben wird.

2. Luftbefeuchter (1) nach einem der vorgenannten Ansprüche, **dadurch gekennzeichnet, dass** die Filterkartusche (4) als Scheibe ausgebildet ist, die insbesondere rotationssymmetrisch zur Drehachse ausgebildet ist.

3. Luftbefeuchter (1) nach einem der vorgenannten Ansprüche, **dadurch gekennzeichnet, dass** die Filterkartusche (4) wenigstens eine Transportstruktur (9) zur Aufnahme und Abgabe von Wasser aufweist.

4. Luftbefeuchter nach einem der vorgenannten Ansprüche, **dadurch gekennzeichnet, dass** die wenigstens eine Transportstruktur (9) in Bezug auf die Drehachse radial nach außen und gleichzeitig gekrümmt verläuft, sodass die wenigstens eine Transportstruktur (9) schaufel- und/oder löffelartig das Wasser aufnehmen kann.

5. Luftbefeuchter (1) nach einem der vorgenannten Ansprüche, **dadurch gekennzeichnet, dass** die Scheibe einen Rand aufweist und die wenigstens eine Transportstruktur (9) insbesondere als Speiche zwischen der Nabe (12) und dem Rand (8) ausgebildet ist.

6. Luftbefeuchter (1) nach einem der vorgenannten Ansprüche, **dadurch gekennzeichnet, dass** die wenigstens eine Transportstruktur (9) dazu ausgebildet ist, bei einer Drehung um die Drehachse in wenigstens einer Drehrichtung aufgenommenes Wasser in ihren in Schwerkraftrichtung oberen Bereich zu transportieren und das Wasser dort aus der Transportstruktur (9) abzugeben, sodass das Wasser an der Filterkartusche (4) entlang, insbesondere am Filtermaterial entlang in Schwerkraftrichtung nach unten fließen kann.

7. Luftbefeuchter (1) nach einem der vorgenannten Ansprüche, **dadurch gekennzeichnet, dass** die wenigstens eine Transportstruktur (9) als Trennwand zur Abtrennung einzelner Kompartimente (10) innerhalb des Bevorratungsraums ausgebildet ist.

8. Luftbefeuchter (1) nach einem der vorgenannten Ansprüche, **dadurch gekennzeichnet, dass** wenigstens zwei der Kompartimente (10) untereinander mit unterschiedlichen Füllmaterialien befüllt sind, wobei insbesondere wenigstens eines der folgenden Füllmaterialien vorgesehen ist: Ionentauscherharz und/oder Aktivkohle und/oder ein Duftstoff und/oder ein Hygienemittel, das vorzugsweise zur Reinigung und/oder Desinfektion des Wassers ausgebildet ist.

9. Luftbefeuchter (1) nach einem der vorgenannten Ansprüche, **dadurch gekennzeichnet, dass** wenigstens eine der wenigstens einen Öffnung (11) mit einem netzartigen, wasserdurchlässigen Material begrenzt ist.

10. Luftbefeuchter (1) nach einem der vorgenannten Ansprüche, **dadurch gekennzeichnet, dass** die Filterkartusche (4) öffenbar und wiederverschließbar ausgebildet ist, um den Bevorratungsraum entleeren und wieder befüllen zu können.

11. Luftbefeuchter (1) nach einem der vorgenannten Ansprüche, **dadurch gekennzeichnet, dass** die Filterkartusche (4) so ausgebildet und/oder derart an der Welle (5) befestigt ist, dass die Bauchseite der Krümmung der wenigstens einen Transportstruktur (9) auf der in Drehrichtung abgewandten Seite liegt.

12. Luftbefeuchter (1) nach einem der vorgenannten Ansprüche, **dadurch gekennzeichnet, dass** die Filterkartusche (4) parallel zu wenigstens einer der wenigstens einen Platte (6) angeordnet ist.

13. Verfahren zur Filterung von Wasser, insbesondere zur Wasserenthärtung und/oder Reinigung von Wasser, in einem Behälter zur Bevorratung des Wassers in einem Luftbefeuchter (1) oder dergleichen, **dadurch gekennzeichnet, dass** ein Behälter (3) zur Bevorratung des Wassers und ein Filtermaterial, insbesondere von Ionentauscherharz, Aktivkohle oder dergleichen, verwendet werden, wobei das Filtermaterial derart bewegt wird, dass es periodisch wenigstens teilweise in das Wasser eingetaucht und wieder aus dem Wasser entnommen wird, wobei ein Luftbefeuchter (1) nach einem der vorgenannten Ansprüche verwendet wird.

## Claims

1. A humidifier (1) for humidifying air by cold evaporation of a liquid, in particular water, with a tank (3) for the storage of the liquid, wherein a roller (2) for humidifying air through cold evaporation of the liquid as well as a motorized drive for rotation of the roller (2) about the axis of rotation are provided,
wherein the roller (2) has a shaft (5) and at least one plate (6), wherein the at least one plate (6) is arranged coaxially in respect to a shaft (5), and wherein the roller (2) is designed such that the at least one plate (6) dips at least partially into the liquid, in order with the moistened part exiting with further rotation from the liquid to release the liquid through cold evaporation to the air to be dehumidified,
**characterized in that** the roller (2) comprises a filter cartridge (4), which is designed for filtering water, in particular for water softening and/or purification of water, for use in a humidifier (1) or the like, with a storage space for the storing of filter material, in particular of ion exchange resin, activated carbon or the like, and with at least one opening (11), in order to supply the water to be filtered to the storage space and/or to release it from the storage space, wherein the filter cartridge (4) is designed to be arranged in the tank (3) with water to be filtered, so that the filter cartridge (4) can protrude into the water stored in the tank (3), wherein the at least one opening (11) is designed both as water inlet for supplying water from the tank into the storage space as well as the water outlet for release of water from the storage space into the tank (3), wherein as a mounting device is provided for the mounting in the tank, namely a hub (12) for fastening to the shaft (5) and/or axis of rotation,
wherein ***the filter cartridge (4) is applied to the shaft (5),***
wherein the filter cartridge (4), in particular the at least one opening (11) is arranged in and/or on the tank (3) such that the water absorbed by the filter cartridge (4) from the tank (3) for the filtering is released again into the tank (3) to the water which has not yet been absorbed.

2. A humidifier (1) according to one of the aforementioned claims, **characterized in that** the filter cartridge (4) is designed as a disk, which is designed in particular rotationally symmetrical to the axis of rotation.

3. A humidifier (1) according to one of the aforementioned claims, **characterized in that** the filter cartridge (4) has at least one transport structure (9) for the absorption and release of water.

4. A humidifier (1) according to one of the aforementioned claims, **characterized in that** the at least one transport structure (9) runs radially outwards and simultaneously curved in relation to the axis of rotation, so that the at least one transport structure (9) can absorb the water in a bucket-like and/or spoon-like manner.

5. A humidifier (1) according to one of the aforementioned claims, **characterized in that** the disk has an edge and the at least one transport structure (9) is designed in particular as a spoke between the hub (12) and the edge (8).

6. A humidifier (1) according to one of the aforementioned claims, **characterized in that** the at least one transport structure (9) is designed for the purpose of transporting water absorbed in a rotation about the axis of rotation in at least one direction of rotation in its upper area in the direction of gravity and for the purpose of releasing the water there from the transport structure (9), so that the water can flow downwards along the filter cartridge (4), in particular along the filter material in the direction of gravity.

7. A humidifier (1) according to one of the aforementioned claims, **characterized in that** the at least one transport structure (9) is designed as a separation wall for the separation of individual compartments (10) within the storage space.

8. A humidifier (1) according to one of the aforementioned claims, **characterized in that** at least two of the compartments (10) are mutually filled with different filling materials, wherein in particular at least one of the following filling materials is provided: ion exchange resin and/or active carbon and/or a fragrant substance and/or a hygiene agent, which is preferably designed for the purification and/or disinfection of the water.

9. A humidifier (1) according to one of the aforementioned claims, **characterized in that** at least one of the at least one opening (11) is delimited by a net-like, water-permeable material.

10. A humidifier (1) according to one of the aforementioned claims, **characterized in that** the filter cartridge (4) is designed to be openable and re-closable, in order to be able to empty and refill the storage space.

11. A humidifier (1) according to one of the aforementioned claims, **characterized in that** the filter cartridge (4) is designed and/or is fastened to the shaft (5) in such a manner that the bulge side of the curvature of the at least one transport structure (9) is on the side facing away in the direction of rotation.

12. A humidifier (1) according to one of the aforementioned claims, **characterized in that** the filter cartridge (4) is arranged parallel to at least one of the at least one plates (6).

13. A method for the filtering of water, in particular for the water softening and/or purification of water, in a tank for the storage of water in a humidifier (1) or the like, **characterized in that** a tank (3) for storage of water and a filter material, in particular of ion exchange resin, active carbon or the like, are used, wherein the filter material is moved in such a manner that it is dipped periodically at least partially into the water and is removed again from the water, wherein a humidifier (1) is used according to one of the aforementioned claims.

## Revendications

1. Humidificateur d'air (1) pour l'humidification d'air par évaporation à froid d'un liquide, plus particulièrement d'eau, avec un récipient (3) pour le stockage du liquide, un rouleau (2) d'humidification d'air par évaporation à froid du liquide ainsi qu'un entraînement motorisé pour la rotation du rouleau (2) autour de l'axe de rotation étant prévus,
le rouleau (2) comprenant un arbre (5) et au moins une plaque (6), l'au moins une plaque (6) étant disposée de manière coaxiale par rapport à un arbre (5) et le rouleau (2) étant conçu de façon à ce que l'au moins une plaque (6) soit immergée au moins partiellement dans le liquide afin de libérer, avec la partie humidifiée, sortant du liquide lors d'une rotation supplémentaire, le liquide par évaporation à froid dans l'air à humidifier,
**caractérisé en ce que**
le rouleau (2) comprend une cartouche filtrante (4) qui est conçue pour le filtrage de l'eau, plus particulièrement pour l'adoucissement de l'eau et/ou le nettoyage de l'eau, pour une utilisation dans un humidificateur d'air (1) ou autre, avec un espace de stockage pour le stockage d'un matériau filtrant, plus particulièrement d'une résine à échange d'ions, d'un charbon actif ou autre, et avec au moins une ouverture (11), pour introduire l'eau à filtrer dans l'espace de stockage et/ou pour l'évacuer hors de l'espace de stockage, la cartouche filtrante (4) étant conçue pour être disposée dans le récipient (3) avec l'eau à filtrer de façon à ce que la cartouche filtrante (4) puisse dépasser au moins partiellement dans l'eau stockée dans le récipient (3), l'au moins une ouverture (11) étant conçue aussi bien comme une entrée d'eau pour l'introduction d'eau du récipient vers l'espace de stockage ainsi que comme sortie d'eau pour l'évacuation de l'eau hors de l'espace de stockage vers le récipient (3), un dispositif de stockage étant prévu pour le stockage dans le récipient, à savoir un moyeu (12) destiné à être fixé à l'arbre (5) et/ou à l'axe de rotation,
la cartouche filtrante (4) étant montée sur l'arbre (5),
la cartouche filtrante (4), plus particulièrement l'au moins une ouverture (11) étant disposée dans et/ou sur le récipient (3) de façon à ce que l'eau prélevée par la cartouche filtrante (4) dans le récipient (3) pour le filtrage soit à nouveau introduite dans le récipient (3) avec l'eau non encore prélevée.

2. Humidificateur d'air (1) selon l'une des revendications précédentes, **caractérisé en ce que** la cartouche filtrante (4) est conçue comme un disque qui est conçu plus particulièrement avec une symétrie de rotation par rapport à l'axe de rotation.

3. Humidificateur d'air (1) selon l'une des revendications précédentes, **caractérisé en ce que** la cartouche filtrante (4) comprend au moins une structure de transport (9) pour le stockage et l'évacuation de l'eau.

4. Humidificateur d'air (1) selon l'une des revendications précédentes, **caractérisé en ce que** l'au moins une structure de transport (9) s'étend radialement vers l'extérieur par rapport à l'axe de rotation et simultanément de manière incurvée, de façon à ce que l'au moins une structure de transport (9) puisse prélever l'eau à la manière d'une pelle et/ou d'une cuillère.

5. Humidificateur d'air (1) selon l'une des revendications précédentes, **caractérisé en ce que** le disque présente un bord et l'au moins une structure de transport (9) est conçue plus particulièrement comme un rayon entre le moyeu (12) et le bord (8).

6. Humidificateur d'air (1) selon l'une des revendications précédentes, **caractérisé en ce que** l'au moins une structure de transport (9) est conçue pour transporter l'eau prélevée, lors d'une rotation autour de l'axe de rotation dans au moins un sens de rotation, dans sa partie supérieure dans la direction de la gravité et évacuer l'eau de la structure de transport (9) de façon à ce que l'eau puisse s'écouler vers le bas dans la direction de la gravité, le long de la cartouche filtrante (4), plus particulièrement le long du matériau filtrant.

7. Humidificateur d'air (1) selon l'une des revendications précédentes, **caractérisé en ce que** l'au moins une structure de transport (9) est conçue comme une cloison pour la séparation de différents compartiments (10) à l'intérieur de l'espace de stockage.

8. Humidificateur d'air (1) selon l'une des revendications précédentes, **caractérisé en ce qu'**au moins deux des compartiments (10) sont remplis de différents matériaux de remplissage, plus particulièrement au moins un des matériaux de remplissage suivants étant prévu : résine à échange d'ions, et/ou charbon actif et/ou un parfum et/ou un produit d'hygiène, qui est conçu de préférence pour le nettoyage et/ou la désinfection de l'eau.

9. Humidificateur d'air (1) selon l'une des revendications précédentes, **caractérisé en ce qu'**au moins une de l'au moins une ouverture (11) est limitée avec un matériau réticulé perméable à l'eau.

10. Humidificateur d'air (1) selon l'une des revendications précédentes, **caractérisé en ce que** la cartouche filtrante (4) est conçue de façon à pouvoir être ouverte et refermée, afin de pouvoir vider et remplir l'espace de stockage.

11. Humidificateur d'air (1) selon l'une des revendications précédentes, **caractérisé en ce que** la cartouche filtrante (4) est conçue et/ou fixée à l'arbre (5) de façon à ce que le côté bombé de la courbure de l'au moins une structure de transport (9) se trouve sur le côté opposé dans le sens de rotation.

12. Humidificateur d'air (1) selon l'une des revendications précédentes, **caractérisé en ce que** la cartouche filtrante (4) est disposée parallèlement à au moins une de l'au moins une plaque (6).

13. Procédé de filtrage d'eau, plus particulièrement d'adoucissement d'eau et/ou de nettoyage d'eau, dans un récipient pour le stockage de l'eau dans un humidificateur d'air (1) ou autre, **caractérisé en ce qu'**un récipient (3) pour le stockage de l'eau et un matériau filtrant constitué, plus particulièrement, d'une résine à échange d'ions, d'un charbon actif ou autre, sont utilisés, le matériau filtrant étant déplacé de façon à ce qu'il soit immergé périodiquement au moins partiellement dans l'eau puis retiré à nouveau de l'eau, un humidificateur d'air (1) selon l'une des revendications précédentes étant utilisé.
